# EUROPEAN PATENT SPECIFICATION

(11) **EP 1 364 765 B1**
(45) Date of publication and mention of the grant of the patent: **25.01.2006**
(21) Application number: 03252283.1
(22) Date of filing: 10.04.2003
(51) Int. Cl.: B29C 45/17

(54) **Injection molding machine with compensation of bending moment on stationary platen**
Spritzgiessmaschine mit biegemomentfreier feststehender Aufspannplatte
Machine de moulage par injection avec plateau de serrage de moule immobile dépourvu de moment de flexion

(30) Priority: 23.05.2002 JP 2002149514
(43) Date of publication of application: 26.11.2003
(60) Divisional application: 05009448.1
(73) Proprietor: FANUC LTD, Minamitsuru-gun, Yamanashi 401-0597 (JP)
(72) Inventor: Yoshioka, Mitsushi, Yamanashi, 401-0502 (JP)
(74) Representative: Billington, Lawrence Emlyn

(56) References cited:
- EP-A- 1 078 728
- DE-A- 2 431 585
- US-A- 2 266 129
- US-B1- 6 354 829
- PATENT ABSTRACTS OF JAPAN vol. 018, no. 435 (M-1655), 15 August 1994 (1994-08-15) -& JP 06 134808 A (SUMITOMO JUKIKAI PLAST MACH KK;OTHERS: 01), 17 May 1994 (1994-05-17)
- PATENT ABSTRACTS OF JAPAN vol. 1995, no. 03, 28 April 1995 (1995-04-28) -& JP 06 339945 A (TOYO MACH & METAL CO LTD), 13 December 1994 (1994-12-13)
- PATENT ABSTRACTS OF JAPAN vol. 2000, no. 26, 1 July 2002 (2002-07-01) -& JP 2001 239561 A (TOSHIBA MACH CO LTD), 4 September 2001 (2001-09-04)

## Description

The present invention relates to an injection molding machine, and more specifically, to an injection molding machine having a mold clamping mechanism and an injection unit arranged horizontally on a base.

In a horizontal injection molding machine, a stationary platen is set up on a base, and a stationary mold is mounted on one surface of the stationary platen. A movable mold is moved by means of a mold clamping mechanism, whereby the mold is opened or closed and clamped. On the other hand, an injection unit is located on the other surface of the stationary platen. In nozzle touch operation, an injection nozzle of the injection unit is pressed against a sprue bush of the stationary mold that is fixed to the stationary platen. In injecting operation, the injection unit is driven to inject molten resin into a cavity of the mold with the injection nozzle kept pressed against the sprue bush.

The stationary platen is subjected to
the force of pressure (hereinafter referred to as nozzle touch force) of the injection nozzle on the stationary mold during the nozzle touch operation. If the stationary platen is pushed over to any extent as a result, positional dislocation is caused between the stationary mold that is attached to the stationary platen and the movable mold on a movable platen. Thus, normal fitting or mold clamping cannot be enjoyed.

A measure to counter this drawback is described in Japanese Patents JP 6 134 808 and JP 2000 094488. According to this system, connecting rods that connect a stationary platen and a member that is fixed to a base behind an injection unit are arranged above and below on one diagonal line of the stationary platen. One end of each connecting rod is fixed to the stationary platen, while the other end is connected to the member that is fixed to the base behind the injection unit. Thus, the stationary platen is prevented from falling over.

According to the prior art means for preventing the stationary platen from falling down, as described above, the stationary platen is fixed to the base, and the connecting rods are fixed to the stationary platen on its diagonal line. Further, the connecting rods are connected to the member that is fixed to the base behind the injection unit. After all, therefore, the stationary platen is fixed to the base also by means of the connecting rods. When the injection nozzle of the injection unit presses the stationary mold with the nozzle touch force, a moment acts on the stationary platen to force it down, since the lower part of the stationary platen is fixed to the base. Since an upper corner of the stationary platen is fixed to the base by means of the upper connecting rod on one diagonal line, the connecting rod serves to prevent the stationary platen from falling down. Since the stationary platen itself is fixed to the base, the lower connecting rod can hardly serve to prevent the stationary platen from being leveled (pushed over) by the nozzle touch force. However, no connecting rod is provided on the other diagonal line. Although the lower part of the stationary platen is fixed to the base, therefore, no connecting rod is fixed in any upper position on this diagonal line, so that the upper part on the diagonal line is free. If the nozzle touch force acts on the stationary platen, in consequence, the stationary platen bends toward the corner side where no connecting rod is connected, so that it falls down inevitably.

Another construction of injection molding machine designed to provide a stable non-inclining stationary platen is provided by EP-A-1078728, which discloses the preamble of claim 1.

The object of the present invention is to provide an injection molding machine designed so that a stationary platen having a stationary mold thereon is prevented from being levelled by the force of pressure of an injection nozzle on the stationary mold in nozzle touch operation.

According to the present invention there is provided an injection molding machine in which a mold clamping mechanism having à stationary platen, and an injection unit facing the stationary platen, are placed on a base, wherein: the stationary platen is fixed on the base; a support member is fixed to the base; a connecting member for connecting the stationary platen and the support member is provided, with one end of said connecting member being fixed to the stationary platen above the point where a nozzle touch force acts; and the other end of said connecting member being fixed to the support member; characterised in that said connecting member is fixed to the stationary platen on a vertical line passing through the point where a nozzle touch force acts.

The connecting member and the support member can prevent the stationary platen from falling down.

In a development of the present invention, the support member may be provided at the rear end of the injection unit or on the mold clamping mechanism side. If it is on the mold clamping mechanism side, the support member may be arranged behind a rear platen or the mold clamping mechanism.

If the support member is at the rear end of the injection unit, on the other hand, the injection unit may be slidably mounted on the connecting member so that the connecting member can serve as guide means for the injection unit.

### BRIEF DESCRIPTION OF THE DRAWINGS

FIG. 1 is a front view of an injection molding machine according to one embodiment, which is not according to the present invention, and is shown for explanation only;
FIG. 2 is a perspective view of an injection unit according to the embodiment of FIG 1;
FIG. 3 is a side view taken from the right-hand side of FIG. 1;
FIG. 4 is an explanatory view explaining where a block member is to be arranged;
FIGS. 5A and 5B are explanatory views explaining the case where a block member 10A is arranged in Fig. 4;
FIGS. 6A to 6C explanatory views explaining the case where a block member 10B is arranged in Fig. 4; and
FIGS. 7A to 7C are explanatory views explaining the case where a block member 10C is arranged in Fig. 4.

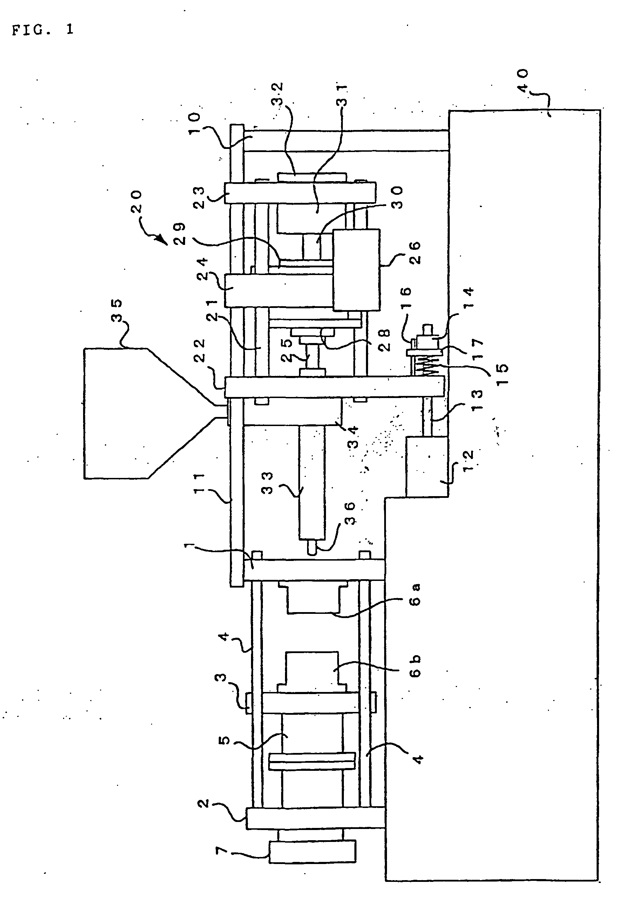

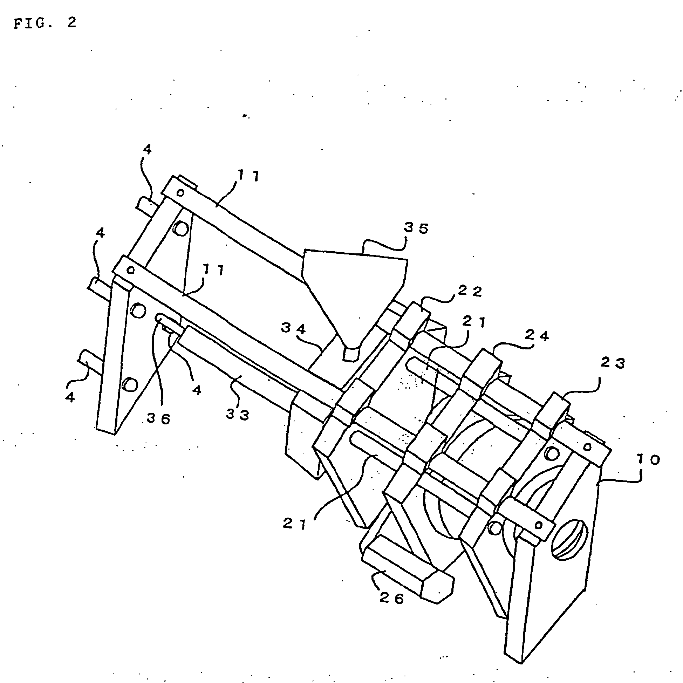

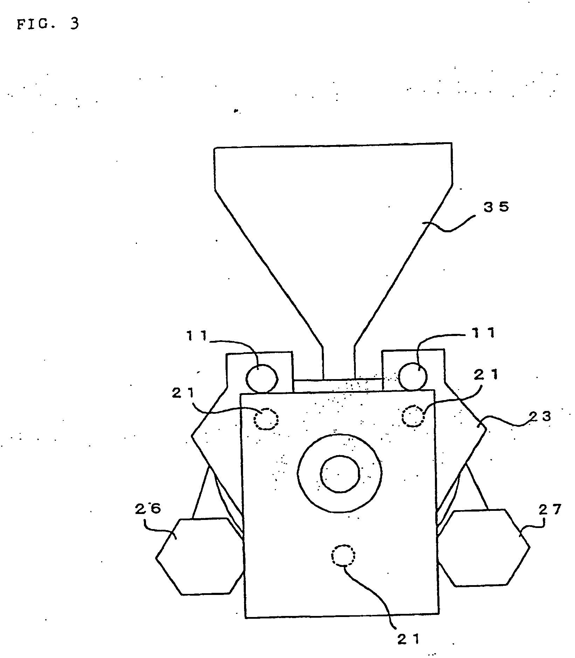

FIG. 1 is a front view of an injection molding machine according to one embodiment. FIG. 2 is a perspective view of an injection unit. FIG. 3 is a side view taken from the right-hand side of FIG. 1. A stationary platen 1 is fixed on a base 40. A mold clamping mechanism is arranged on the stationary platen 1 on the side of one surface thereof. More specifically, a rear platen 2 that constitutes a part of the mold clamping mechanism is placed on the base 40. Four tie-bars 4 are mounted between the rear platen 2 and the stationary platen 1. A movable platen 3 is mounted between the rear platen 2 and the stationary platen 1 so as to be slidable along the four tie-bars 4. Guided by the tie-bars 4, the movable platen 3 can move in the horizontal direction of FIG. 1. A mold clamping mechanism 5 is provided between the rear platen 2 and the movable platen 3. A stationary mold 6a is attached to the stationary platen 1, while a movable mold 6b is attached to the movable platen 3 on the side facing the stationary platen 1. Numeral 7 denotes a pulley for driving the mold clamping mechanism.

The pulley 7 is driven by means of a mold clamping motor (not shown) with the aid of pulleys, belt, etc. Thereupon, a ball screw that mates with a ball nut integral with the pulley 7 is driven to actuate the mold clamping mechanism 5. Thus, the movable platen 3 is moved so that the movable mold 6b and the stationary mold 6a are opened or closed and clamped.

On the other hand, the injection unit is arranged on the stationary platen 1 on the side of the other surface thereof. At the extreme rear end (extreme right-hand end in FIG. 1) of the other surface side of the fixed platen 1, a block (support) member 10 is fixed and set up on the base 40. Connecting members 11 are fixed to the respective top sides of the block member 10 and the stationary platen 1. In this embodiment, the mounted connecting members 11 are two in number.

An injection unit 20 is slidably mounted on the connecting members 11. The injection unit 20 is provided with first and second plates 22 and 23, which are fixedly connected to each other by means of three tie-rods 21, and a moving plate 24 between the plates 22 and 23. The moving plate 24 is guided by the three tie-rods 21 and the connecting members 11 as it moves in the .horizontal direction of FIG. 1.

As shown in FIGS. 2 and 3, the first and second plates 22 and 23 and the moving plate 24 have a substantially triangular shape with one vertex facing downward, and are slidably mounted on the connecting members 11. In this embodiment, the injection unit 20 is suspended from the connecting members 11.

A resin supply mechanism 34 is attached to the surface of the first plate 22 on the side of the stationary platen 1. The resin supply mechanism 34 has a heating cylinder 33 and a hopper 35 that is used to feed resin into the cylinder 33. Numeral 36 denotes an injection nozzle on the distal end of the heating cylinder 33.

An injection screw 25 that is inserted in the heating cylinder 33 is attached to the moving plate 24 so as to be rotatable and relatively immovable in the axial direction (horizontal direction of FIG. 1). The moving plate 24 is also provided with a servomotor 26 for screw rotation that rotates the injection screw 25 and a servomotor 27 (see FIG. 3) for injection that drives the moving plate 24 in the axial direction of the screw 25 (horizontal direction of FIG. 1) to advance the screw 25, thereby executing injection. Further, the plate 24 is provided with a pulley 28 for rotating the injection screw 25 and a pulley 29 for rotating a ball screw 30. The ball screw 30 is attached to the moving plate 24 so as to be rotatable and axially immovable.

The second plate 23 is fitted with a ball nut 31 by means of a load cell 32 for detecting the injection pressure and the like. The ball nut 31 mates with the ball screw 30.

As the servomotor 26 for screw rotation is driven, the pulley 28 is rotated by means of pulleys, belt, etc., whereupon the injection screw 25 is rotated to knead the resin. As the servomotor 27 for injection is driven, moreover, the pulley 29 is rotated by means of pulleys, belt, etc., whereupon the ball screw 30 that is fixed to the pulley 29 rotates. Since the ball nut 31 that mates with the ball screw 30 is fixed to the second plate 23, the ball screw 30 moves relatively to the second plate 23 in the axial direction as it rotates, thereby moving the moving plate 24. Thereupon, the injection screw 25 is moved in the axial direction to effect injection or the like.

The first and second plates 22 and 23 and the moving plate 24 of the injection unit 20 have a substantially triangular shape with one vertex facing downward, as mentioned before, and are connected to one another by means of the three tie-rods 21 at points near their respective three vertexes, as shown in FIG. 3. Therefore, the servomotor 26 for screw rotation and the servomotor 27 for injection, which are used to rotate and axially move the injection screw 25, can be arranged below the injection unit 20. Thus, the resulting injection molding machine is compact.

Further, the base 40 is fitted with a motor (geared motor) 12 for nozzle touching, which advances the injection unit 20 to cause the injection nozzle 36 to press against a sprue bush of the stationary mold that is attached to the stationary platen 1. A ball screw 13 is connected to the rotor shaft of the nozzle touching motor 12.

Furthermore, two guide rods 16 are fixed to the first plate 22, and a plate 17 is slidably mounted on the respective distal end portions of the rods 16. A ball nut 14 is fixed to the plate 17. The ball screw 13 that is connected to the rotor shaft of the nozzle touching motor 12 penetrates a hole or notch (notch in this embodiment) in the first plate 22 and mates with the ball nut 14 on the plate 17. A spring 15 is interposed between the plate 17 and the first plate 22.

In nozzle touch operation, the nozzle touching motor 12 is driven to rotate the ball screw 13. The ball nut 14 that mates with the ball screw 13 is fixed to the plate 17. This plate 17 is attached to the two guide rods 16 fixed to the first plate 22 so that it slides on the guide rods 16, prevented from rotating. Thus, the ball nut 14, not allowed to rotate, advances along the ball screw 13 to cause the first plate 22 to advance (move to the left of FIG. 1) through the spring 15.

When the injection nozzle 36 engages the stationary mold 6a, the first plate 22 ceases to advance. If the nozzle touching motor 12 is further driven, however, the plate 17 further advances compressing the spring 15. In consequence, a nozzle touch force that presses the stationary mold 6a of the injection nozzle 36 is settled depending on the extent of compression of the spring 15. The drive of the nozzle touching motor 12 is stopped at the position where the extent of compression of the spring 15, which allows to give a preset nozzle touch force, is obtained.

This nozzle touch force is transmitted to the stationary platen 1 via the stationary mold 6a, and acts so as to level (push over) the stationary platen 1. Since the stationary platen 1 has its lower end fixed to the base 40, the nozzle touch force that is applied to the central portion of the platen 1 is urged to level the platen 1. According to the present embodiment, however, the upper end portion of the stationary platen 1 is fixed to the block member 10 by means of the connecting members 11, and the block member 10 is fixed to the base 40. Therefore, the upper end of the stationary platen 1 is also fixed to the base 40, so that the stationary platen 1 can be prevented from falling down.

According to this embodiment, the stationary platen 1 is symmetrically fixed by means of the connecting members 11. More specifically, the connecting members 11 are fixed to the stationary platen 1 on the opposite sides of a line that extends at right angles to the surface of the stationary platen 1 on the side of the base 40 and passes through a point where the injection nozzle 36 applies the nozzle touch force. Preferably, the connecting members 11 are fixed in positions symmetrical with respect to the line, as in this-embodiment. Thus, the nozzle touch force acts equally on the two connecting members 11, so that the stationary platen 1 can be uniformly supported without warping and prevented from falling down.

In case where the connecting members 11 used are two or more in number, it is necessary only that they be arranged symmetrically with respect to the vertical line that passes through the point on which the nozzle touch force acts, as described above. In case where only one connecting member 11 is used, it must only be fixed to the stationary platen 1 above the point where a nozzle touch force acts and on the vertical line that passes through the point where a nozzle touch force acts. It is to be understood that this arrangement of one connecting member 11 is in accordance with the present invention, whereas embodiments having two or more connecting members 11 are not in accordance with the present invention, and are the subject of a divisional application.

According to the embodiment described above, the block member 10 is formed of a plate that resembles the stationary platen 1. Since it is expected only to fix the connecting member or members 11 to the base 40, however, the block member 10 may be formed of a columnar member in place of a plate.

According to the foregoing embodiment, the injection unit 20 is suspended from the connecting members 11 so that it can be guided by the connecting members 11 as it moves for nozzle touching or the like. Thus, the connecting members 11 have three functions; a function to suspend the injection unit 20, function to guide the injection unit 20 for advance and retreat, and function to prevent the stationary platen 1 from falling down.

Alternatively, however, the base 40 may be provided with a guide member for guiding the injection unit 20, as in the conventional case. In this case, the injection unit 20 can be advanced or retreated along the guide member to effect nozzle touching. In this case, moreover, the connecting member 11 that is arranged between the stationary platen 1 and the block member 10 serves only as means for preventing the platen 1 from falling down.

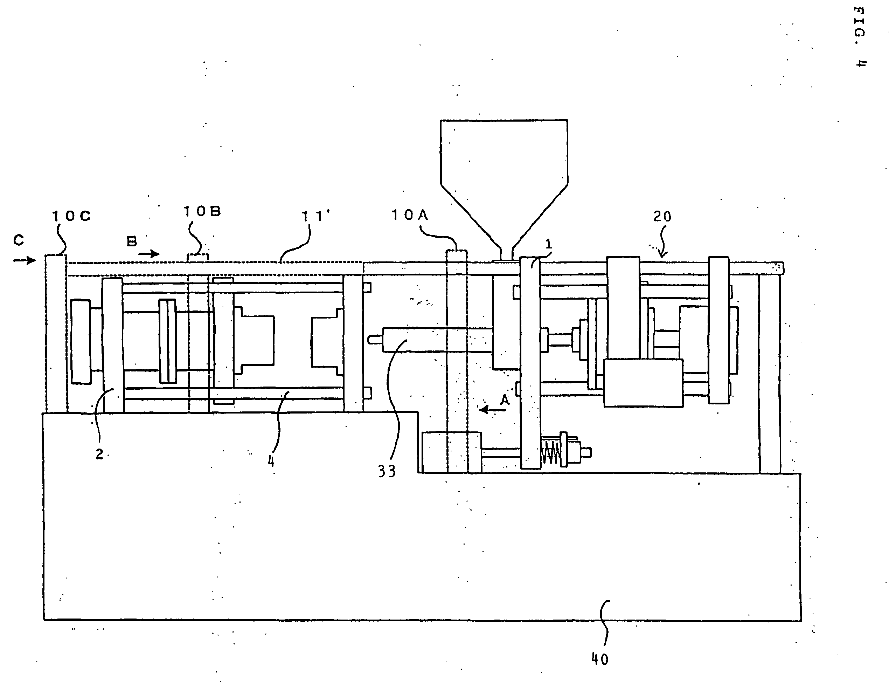

The location of the block member 10 is not limited to the position of the rear end of the injection unit according to the foregoing embodiment. Essentially, the block member 10 should only be located in a position such that it can prevent the stationary platen 1 from being leveled by the nozzle touch force. Therefore, a block member 10A may be located in a position within the range of movement of the heating cylinder 33 and fixed to the base 40, as indicated by broken line in FIG. 4, for example. Since the injection unit 20 cannot be suspended, in this case, a guide member should only be arranged on the base 40 so that the injection unit can be guided by the guide member as it slides on the base 40, as in the conventional case.

Further, the block member may be arranged on the mold clamping mechanism side. As indicated by broken line in FIG. 4, for example, a block member 10B may be fixed to the base 40 in a position such that it never hinders the operations of the movable platen 3 and the mold clamping mechanism 5. In this case, connecting members 11' extend between and are fixed individually to the block member 10B and the stationary platen 1. Thus, the connecting members 11' and the block member 10B can prevent the stationary platen 1 from being leveled by the nozzle touch force that acts on the platen 1 during nozzle touch operation.

As indicated by broken line in FIG. 4, moreover, a block member 10C may be fixed to the base 40 behind the rear platen 2 and the tie-bars 4. Also in this case, the connecting members 11' extend between and are fixed individually to the block member 10C and the stationary platen 1. Thus, the connecting members 11' and the block member 10C can prevent the stationary platen 1 from being leveled by the nozzle touch force.

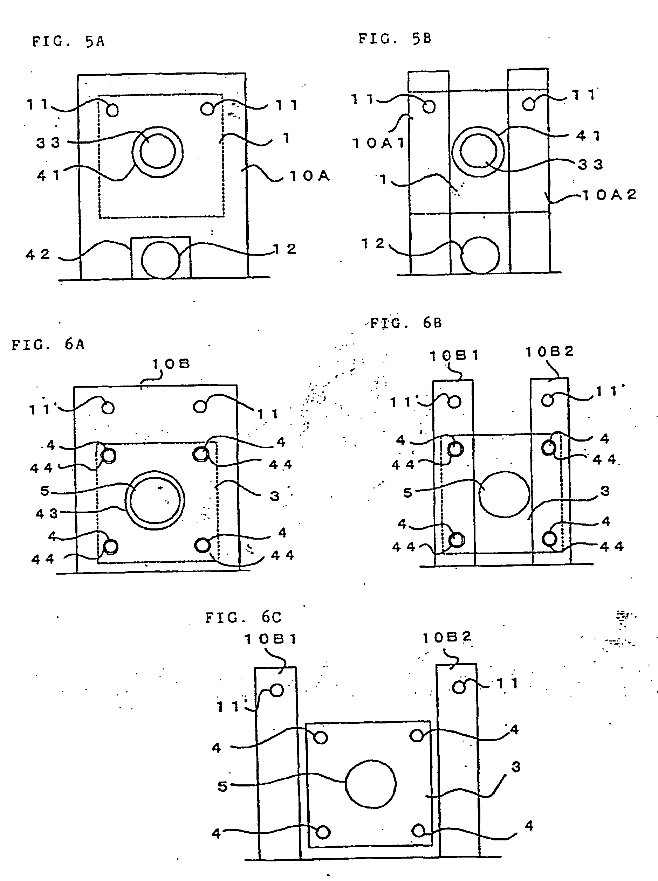

FIGS. 5A and 5B are views taken in the direction of arrow A in FIG. 4 and each illustrating the block member 10A located in the region of movement of the heating cylinder 33. FIG. 5A shows one example of the block member 10A in a shape of plate, and FIG. 5B shows another example of the block member 10A in a shape of column.

In the case shown in FIG. 5A, the plate-like block member 10A, which is fixed on the base 40, is provided with a hole 41 through which the heating cylinder 33 passes, and a notch 42 is formed in the position where the nozzle touching motor 12 is arranged. Further, the two connecting members 11 are fixed to the block member 10A. They are also fixed to the stationary platen 1 and prevent the platen 1 from being leveled by the nozzle touch force.

The block member 10A of FIG. 5B is formed by fixing two columnar members to the base 40. One end of each of the two connecting members 11 is fixed to the stationary platen 1, and the other ends of these two connecting members 11 are fixed respectively by means of the columnar block members 10A1 and 10A2, whereby the platen 1 is prevented from being leveled by the nozzle touch force.

FIGS. 6A to 6C are views showing cases where the block member 10B is provided around the mold clamping mechanism 5. FIG. 6A shows a block member 10B in a shape of plate, and FIGS. 6B and 6C show block members 10B1 and 10B2 formed of two columns, respectively.

The block member 10B shown in FIG. 6A is provided with a hole 43 lest the block member 10B hinder the operation of the mold clamping mechanism 5. Further, the block member 10B has holes 44 which allow the tie-bars 4 to pass through and slide. The block member 10B is fixed to the base 40. The two connecting members 11' extend between the block member 10B and the upper part of the stationary platen 1. The connecting members 11' are fixed to the block member 10B and the stationary platen 1, individually. In this case, the two connecting members 11' and the block member 10B can also prevent the stationary platen 1 from being leveled by the nozzle touch force.

In the case shown in FIG. 6B, a block member is formed of two columnar block members 10B1 and 10B2. These block members 10B1 and 10B2 are fixed to the base 40. Each of the block members 10B1 and 10B2 has holes 44 which allow the tie-bars 4 to pass through and slide. One end of each connecting member 11' is fixed to the upper part of each of the block members 10B1 and 10B2, and the other end is fixed to the upper part of the stationary platen 1. With this configuration, the stationary platen 1 can be prevented from being leveled by the nozzle touch force.

In the case shown in FIG. 6C, the two columnar block members 10B1 and 10B2 are fixed to the base 40 so that they are located outside the mold clamping mechanism 5 and the tie-bars 4. One end of each connecting member 11' is fixed to the upper part of each of the block members 10B1 and 10B2, and the other end is fixed to the upper part of the stationary platen 1. With this configuration, the stationary platen 1 can be prevented from being leveled by the nozzle touch force.

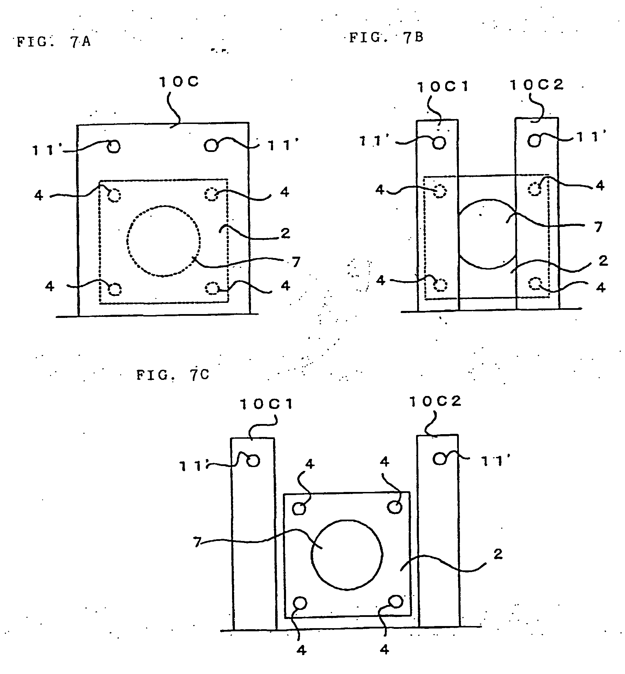

In the cases shown in FIGS. 7A to 7C, the block member 10C is arranged behind the rear platen 2 and the mold clamping mechanism 5. The block member 10C of FIG. 7A is formed of a member in the shape of plate, and one end of each of two connecting members 11' is fixed to the upper part of the block member 10C. The other end of each connecting member 11' is fixed to the upper part of the stationary platen 1.

In the case shown in FIG. 7B, block members 10C1 and 10C2 are formed of two columnar block members. Also in this case, one end of each connecting member 11' is fixed to the upper part of each of the two block members 10C1 and 10C2. The other end of each connecting member 11' is fixed to the upper part of the stationary platen 1.

In the case shown in FIG. 7C, the two columnar block members 10C1 and 10C2 are fixed to the base 40 so that they are located outside the mold clamping mechanism 5 and the tie-bars 4. Also in this case, one end of each connecting member 11' is fixed to the upper part of each of the block members 10C1 and 10C2. The other end of each connecting member 11' is fixed to the upper part of the stationary platen 1.

In the cases shown in FIGS. 7A to 7C, the connecting members 11' and the block members 10C (10C1 and 10C2) can also prevent the stationary platen 1 from being leveled by the nozzle touch force.

According to the present invention, the stationary platen that is fitted with the stationary mold can be prevented from being leveled by the nozzle touch force. Thus, accurate mold clamping can be achieved without entailing dislocation between the cavity- and movable molds.

## Claims

1. An injection molding machine in which a mold clamping mechanism (5) having a stationary platen (1), and an injection unit (20) facing the stationary platen (1), are placed on a base (40), wherein:
the stationary platen (1) is fixed on the base (40) ;
a support member (10) is fixed to the base (40);
a connecting member (11) for connecting the stationary platen (1) and the support member (10) is provided, with one end of said connecting member (11) being fixed to the stationary platen (1) above the point where a nozzle touch force acts; and
the other end of said connecting member (11) being fixed to the support member (10);
**characterised in that** said connecting member (11) is fixed to the stationary platen (1) on a vertical line passing through the point where the nozzle touch force acts.

2. The injection molding machine according to claim 1, wherein said support member (10) is fixed to the base (40) on the side of the injection unit (20) with respect to the stationary platen (1).

3. The injection molding machine according to claim 2, wherein said support member (10) is fixed on the base (40) at the rear end of the injection unit (20).

4. The injection molding machine according to claim 3, wherein the injection unit (2) is slidably mounted on the connecting member (11).

5. The injection molding machine according to claim 1, wherein said support member (10) is fixed to the base (1) on the side of the mold clamping mechanism (5) with respect to the stationary platen (1).

6. The injection molding machine according to claim 5, wherein said support member (10) is fixed behind a rear platen (2).

7. The injection molding machine according to claim 5, wherein said support member (10) is fixed behind the mold clamping mechanism (5).

8. The injection molding machine according to any of claims 1 to 7, wherein the support member (10) is in the form of a plate.

## Patentansprüche

1. Spritzgussmaschine, wobei ein Werkzeugschließmechanismus (5) mit einer stationären Aufspannplatte (1) und eine der stationären Aufspannplatte (1) zugewandte Spritzeinheit (20) auf einem Sockel (40) untergebracht sind,
wobei:
die stationäre Aufspannplatte (1) auf dem Sockel (40) befestigt ist;
ein Halterungsbauteil (10) am Sockel (40) befestigt ist;
ein Verbindungsbauteil (11) zum Verbinden der stationären Aufspannplatte (1) und des Halterungsbauteils (10) vorgesehen ist, wobei ein Ende des Verbindungsbauteils (11) an der stationären Aufspannplatte (1) oberhalb des Punktes befestigt ist, an dem eine Düsenanlagekraft wirkt; und
das andere Ende des Verbindungsbauteils (11) an dem Halterungsbauteil (10) befestigt ist;
**dadurch gekennzeichnet, dass**
das Verbindungsbauteil (11) an der stationären Aufspannplatte (1) auf einer vertikalen Linie befestigt ist, die durch den Punkt verläuft, an dem die Düsenanlagekraft wirkt.

2. Spritzgussmaschine nach Anspruch 1, wobei das Halterungsbauteil (10) am Sockel (40) auf der Seite der Spritzeinheit (20) in Bezug auf die stationäre Aufspannplatte (1) befestigt ist.

3. Spritzgussmaschine nach Anspruch 2, wobei das Halterungsbauteil (10) auf dem Sockel (40) am hinteren Ende der Spritzeinheit (20) befestigt ist.

4. Spritzgussmaschine nach Anspruch 3, wobei die Spritzeinheit (2) gleitend auf dem Verbindungsbauteil (11) befestigt ist.

5. Spritzgussmaschine nach Anspruch 1, wobei das Halterungsbauteil (10) am Sockel (1) auf der Seite des Werkzeugschließmechanismus (5) in Bezug auf die stationäre Aufspannplatte (1) befestigt ist.

6. Spritzgussmaschine nach Anspruch 5, wobei das Hatterungsbauteil (10) hinter einer rückseitigen Aufspannplatte (2) befestigt ist.

7. Spritzgussmaschine nach Anspruch 5, wobei das Halterungsbauteil (10) hinter dem Werkzeugschließmechanismus (5) befestigt ist.

8. Spritzgussmaschine nach einem der Ansprüche 1 bis 7, wobei das Halterungsbauteil (10) die Form einer Platte aufweist.

## Revendications

1. Une machine de moulage par injection dans laquelle un mécanisme de serrage de moule (5) comprenant un plateau fixe (1), et un ensemble d'injection (20) faisant face au plateau fixe (1), sont placés sur un bâti (40), où :
le plateau fixe (1) est fixé sur le bâti (40),
on prévoit un élément de liaison (11) pour relier le plateau fixe (1) et l'élément de support (10), avec une extrémité dudit élément de liaison (11) qui est fixée au plateau fixe (1) au-dessus du point où agit une force de toucher de buse ; et
l'autre extrémité dudit élément de liaison (11) étant fixée à l'élément de support (10) ;
**caractérisée en ce que** ledit élément de liaison (11) est fixé au plateau fixe (1) sur une ligne verticale passant par un point où agit la force de toucher de buse.

2. La machine de moulage par injection selon la revendication 1, dans laquelle ledit élément de support (10) est fixé au bâti (40) sur le côté de l'ensemble d'injection (20) par rapport au plateau fixe (1).

3. La machine de moulage par injection selon la revendication 2, dans laquelle ledit élément de support (10) est fixé sur le bâti (40) à l'extrémité arrière de l'ensemble d'injection (20).

4. La machine de moulage par injection selon la revendication 3, dans laquelle l'ensemble d'injection (2) est monté de manière coulissante sur l'élément de liaison (11).

5. La machine de moulage par injection selon la revendication 1, dans laquelle ledit élément de support (10) est fixé au bâti (1) sur le côté du mécanisme de serrage de moule (5) par rapport au plateau fixe (1).

6. La machine de moulage par injection selon la revendication 5, dans laquelle ledit élément de support (10) est fixé derrière un plateau arrière (2).

7. La machine de moulage par injection selon la revendication 5, dans laquelle ledit élément de support (10) est fixé derrière le mécanisme de serrage de moule (5).

8. La machine de moulage par injection selon l'une quelconque des revendications 1 à 7, dans laquelle l'élément de support (10) se présente sous la forme d' une plaque.
